(19) Europäisches Patentamt
European Patent Office
Office européen des brevets

(11) **EP 4 287 435 A1**

(12) # EUROPEAN PATENT APPLICATION

(43) Date of publication:
**06.12.2023 Bulletin 2023/49**

(21) Application number: **22176661.1**

(22) Date of filing: **01.06.2022**

(51) International Patent Classification (IPC):
**H02J 3/14** *(2006.01)*        **H02J 3/38** *(2006.01)*

(52) Cooperative Patent Classification (CPC):
**H02J 3/381; H02J 3/14;** H02J 2203/10;
H02J 2300/20

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Gamesa Renewable Energy A/S**
**7330 Brande (DK)**

(72) Inventors:
• **Hellstern, Henrik Christian Lund**
  **8210 Aarhus V (DK)**
• **Petersen, Jesper Elliot**
  **6870 Oelgod (DK)**

(74) Representative: **SGRE-Association**
**Siemens Gamesa Renewable Energy GmbH & Co KG**
**Schlierseestraße 28**
**81539 München (DE)**

(54) **METHOD FOR COMPUTER-IMPLEMENTED CONTROLLING A HYBRID POWER PLANT**

(57)     The invention refers to a method for computer-implemented controlling a hybrid power plant (1) being connected to an electrical grid (30). The hybrid power plant (1) comprises at least one energy producer (11, 12) being adapted to generate electric energy from renewable energy sources and at least one energy consumer (21) being adapted to convert electric energy into chemicals. Furthermore, it comprises a power plant control system (40) comprising a monitoring unit (41) being adapted to receive measured power key figures ($P_{11}$, $P_{12}$, $P_{21}$) of the at least one energy producer (11, 12) and the at least one energy consumer (21) and to provide chemicals' production information (CPI). The following steps are performed by the power plant control system (40) during the operation of the hybrid power plant (1): In step a), for a given time interval, measured power key figures ($P_{11}$, $P_{12}$, $P_{21}$) of the at least one energy producer (11, 12) and the at least one energy consumer (21) are obtained. In step b), the measured power figures ($P_{11}$, $P_{12}$, $P_{21}$) are processed to determine, for the given time interval, a fraction of renewable energy used for conversion of the electric energy into the chemicals as a chemicals' production information (CPI), where the fraction is called a green fraction (GF). In step c), the green fraction (GF) is processed for a control operation of the hybrid power plant (1).

FIG 2

EP 4 287 435 A1

## Description

The invention relates to a method and an apparatus for computer-implemented controlling a hybrid power plant being connected to an electrical grid. The hybrid power plant comprises at least one energy producer being adapted to generate electric energy from renewable energy sources, at least one energy consumer being adapted to convert electric energy into chemicals, and a power plant control system. The power plant control system comprises a monitoring unit being adapted to receive measured power key figures of the at least one energy producer and the at least one energy consumer and to provide chemicals' production information.

In order to reach climate targets, global energy production must reduce emissions drastically. However, several energy consuming sectors are difficult to fully electrify, such as industry, transport, and agriculture. Power-to-X (PtX) chemicals, such as hydrogen, can be used in fuel cells, as building block for production of ammonia or methanol, steel production, electro fuels, and so on. PtX chemicals can be produced using renewable energy sources. However, if the renewable energy penetration of the electrical grid used for chemical production is not sufficiently high, then $CO_2$ emissions from electricity generation may eclipse that of the fossil fuel which hydrogen or other PtX chemicals were intended to replace.

A transition from fossil fuels to green hydrogen or other PtX chemicals which are produced from renewable energy requires a quantification scheme to determine what fraction of energy consumed actually came from renewable energy sources. This topic is addressed in the Renewable Energy Directive (RED II) which is currently under revision.

Currently, electrolysis as an example of a PtX technology is rapidly gaining interest. Electrolyzers may be connected to an electrical grid or off-grid directly to a dedicated energy source (so-called island mode). If the electrolyzer is powered by a specific renewable energy source, such as a wind turbine or a photovoltaic array, then renewable power generation and hydrogen production can be correlated in real time. Authentication of electricity used for production of PtX chemicals from a renewable source may be made with renewable energy certificates which are known as a financial instrument. As most renewable energy sources are grid connected, the determination of renewable penetration in the local energy mix in real time is not trivial.

It is an object of the present invention to provide a method for computer-implemented controlling a hybrid power plant being connected to an electrical grid which is able to ensure a renewable energy penetration used for production of PtX chemicals.

This object is solved by the independent claims. Preferred embodiments are set out in the dependent claims.

The invention provides a method for computer-implemented controlling a hybrid power plant being connected to an electrical grid. The hybrid power plant comprises at least one energy producer being adapted to generate electric energy from renewable energy sources, at least one energy consumer being adapted to convert electric energy into chemicals, and a power plant control system.

The energy producer may be a single wind turbine, a plurality of wind turbines of a wind farm or a photovoltaic array. The energy consumer may be a Power-to-X (PtX) system which is able to convert electric energy into a chemical, such as hydrogen. In that case, the energy consumer may be an electrolyzer.

The power plant control system comprises a monitoring unit which is adapted to receive measured power key figures of the at least one energy producer and the at least one energy consumer. The measured power key figures may be, for a specific timepoint, generated or consumed power levels of the components of the hybrid power plant. If a given time interval, such as seconds, minutes or hours, is considered, the measured power key figures may correspond to the electric energy which is produced or consumed by the at least one energy producer and the at least one energy consumer, respectively, for that time interval.

The monitoring unit of the power plant control system is adapted to provide chemicals' production information. The chemicals' production information relates to further details of energy production and consumption for a specific point in time or a given time interval, such as time stamps.

During the operation of the hybrid power plant, the following steps are performed by the power plant control system:

According to step a), for a given time interval, measured power key figures of the at least one energy producer and the at least one energy consumer are obtained. In step b), the measured power figures are processed to determine, for the given time interval, a fraction of renewable energy used for conversion of the electric energy into the chemicals as a chemical' production information. The fraction is called a green fraction GF. In step c), the green fraction is processed for a control operation of the hybrid power plant.

According to the method of the invention, a straightforward method is provided which enables to control the green fraction of produced chemicals by means of a hybrid power plant. The actual green fraction will be used to control operation of the power plant assets to arrive, at any time, at a desired green fraction. The green fraction represents the fraction of energy from a specific grid connected renewable energy producer used for production of hydrogen or any other PtX chemical. It can be used to generate a report or certificate (guarantee of origin).

As a requirement, the monitoring unit needs data access to both the energy consuming facility and the renewable energy source(s). The monitoring unit can then monitor power/energy consumption of the energy consumer and power/energy generation from the at least one energy producer (renewable source(s)). These data streams are fed into the monitoring unit for determining the green fraction. Preferably, the power/energy values, the green fraction and the associated time interval are stored in a database of the power plant control system for later assessment. The database may be part of the monitoring unit. The database may also be connected to the monitoring unit. In any case, it is part of the power plant control system.

The control operation of the hybrid power plant is such that the green fraction at least needs a given threshold. If the environmental conditions do not allow producing hydrogen or other PtX chemical with the necessary green fraction, the hybrid power plant may stop operation with respect to producing hydrogen or PtX chemical.

According to a further preferred embodiment, the green fraction is defined as

$$(1) \qquad GF = 1,0$$

for $P_{10} \geq P_{21}$, and

$$(2) \qquad GF = P_{10} \ / \ P_{21}$$

for $P_{10} < P_{21}$

where $P_{10}$ is the total amount of electric energy produced by the at least one energy producer (energy source(s)), and $P_{21}$ is the amount of energy used/consumed by the at least one energy consumer for conversion of the electric energy into the chemicals.

The first equation (1) is true, if there is, for example, high wind or solar radiation, where any excess power produced by the at least one energy producer can be exported to the electrical grid. If the energy provided by the at least one energy producer is not sufficient to provide the necessary energy for the at least one energy consumer (e.g., at low wind conditions or solar radiation), additional electric energy has to be drawn from the electrical grid. In this case, equation (2) is valid.

According to a further preferred embodiment, processing the green fraction comprises determining a first control variable which represents a power demand of the at least one energy consumer. The power demand is a reference signal indicating how much the at least one energy consumer should consume of electricity. Accordingly, the output of chemicals can be controlled.

According to a further preferred embodiment, processing the green fraction comprises determining a second control variable which represents a power demand of the at least one energy producer. Hence, the energy producers, such as wind turbine generators, can be controlled to achieve a specific green fraction and at the same time control export or import of electric power from the electrical grid. The control variable can be a kind of setpoint. Alternatively, the control variable may already consist of control parameters, e.g., directly used to adapt a rotational speed and/or a yaw angle of a wind turbine and so on.

According to a further preferred embodiment, the first and second control variables are determined depending on an available power of the at least one energy producer. The available power of the at least one energy producer may therefore be communicated to the monitoring unit in order to allow the monitoring unit to calculate and adapt the green fraction, if applicable.

The first and second control variables are determined by a hybrid plant controller which may be part of the power plant control system.

According to a further preferred embodiment, the hybrid power plant comprises an offtaking section with at least one chemicals' dispenser, each of the at least one dispenser having a green fraction renewable energy penetration associated therewith, where filling of the chemical to a respective storage volume connected to the at least one dispenser is controlled according to the associated green fraction. Controlling takes place under the control of the hybrid plant controller mentioned above. In particular, the monitoring unit may determine the chemicals' transport delay within the facility from the energy consumer exit to a respective dispenser and feed this information to the monitoring unit.

According to a further preferred embodiment, the hybrid power plant comprises a buffer volume connected between the at least one energy consumer and the offtaking section, where filling of the chemical to a respective storage volume is made out of the buffer volume. Even if it is not possible to produce a chemical at any time with the required green fraction, the chemical having a known green fraction associated therewith can be taken from the buffer volume, such that dispensing the chemical can be made without interruption.

According to a further aspect of the present invention, a computer program product with program code is suggested, which is stored on a non-transitory machine-readable carrier, for carrying out a method according to one or more embodiments of the present invention, when the program code is executed on a computer.

Furthermore, an apparatus for computer-implemented controlling a hybrid power plant being connected to an electrical grid is provided. A processing unit of the apparatus is configured to perform the method according to one or more embodiments of the present invention as set out therein.

Moreover, a hybrid power plant comprising an apparatus according to the invention is suggested. It is preferred that the at least one energy producer and the at least one energy consumer are co-located at the same production site. When co-located, the renewable energy producer(s) and the energy consumer(s) share a sub-section of the grid to form the hybrid power plant where the renewable energy producer(s) and the energy consumer(s) share the same point of connection to the electrical grid. Hence, the point of connection is the interface between the hybrid power plant and the electrical grid. Typically, that will be within a radius of a few km distance (typically 1-10 km or 1-5 km) from the PtX production and at least one of the renewable energy producer(s).

The invention will be explained by reference to the accompanying figures.

Fig. 1    shows an illustration of the correlation between power consumption of a PtX facility and power production from a renewable energy source;

Fig. 2    a first embodiment of a hybrid power plant according to the present invention;

Fig. 3    a second embodiment of a hybrid power plant according to the present invention;

Fig. 4    a third embodiment of a hybrid power plant according to the present invention;

Fig. 5    a fourth embodiment of a hybrid power plant according to the present invention; and

Fig. 6    an example of a PtX facility connected to an offtaking section according to an embodiment of the invention.

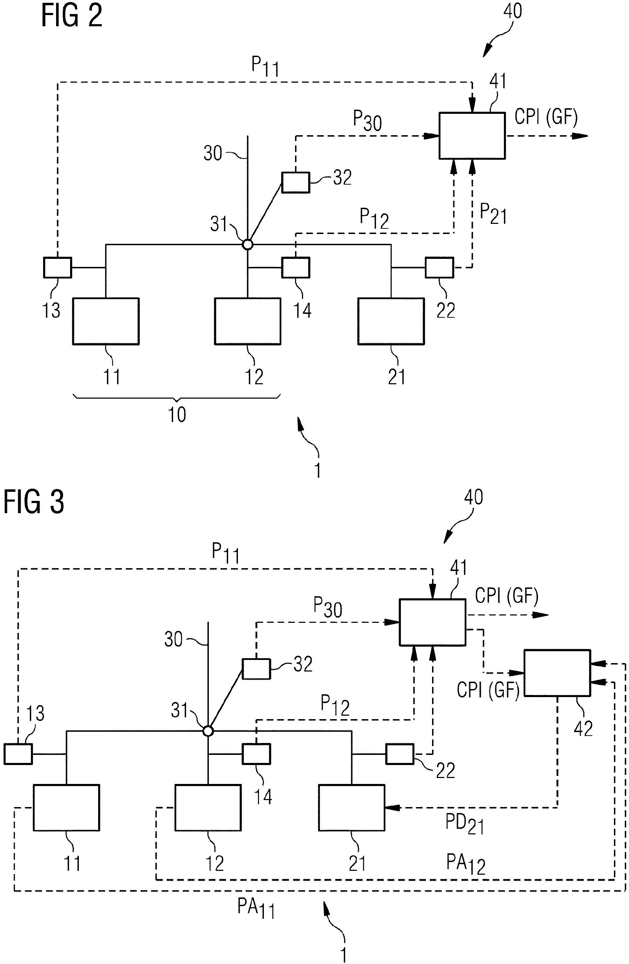

Fig. 2 shows a first embodiment of a hybrid power plant 1 according to a first embodiment of the invention. The hybrid power plant 1 comprises two energy producers 11, 12. Each of the energy producers may be, for example, a wind turbine, a plurality of wind turbines of a wind farm or a photovoltaic array. In any way, the energy producers 11, 12 are adapted to generate electric energy from renewable energy sources, i.e., wind or solar radiation. The energy producers 11, 12 are also referred to as renewable energy source.

In addition, the hybrid power plant 1 comprises a single energy consumer 21. The energy consumer is adapted to convert electric energy into a chemical, for example hydrogen, ammonia, methanol or any other chemical. In particular, the energy consumer 21 may be an electrolyzer. Generally, the energy consumer 21 can be called a Power-to-X (PtX) operator.

It is to be understood that the number of energy producers 11, 12 and energy consumer 21 illustrated in Fig. 2 and the further embodiments according to Figs. 3 to 5 could be chosen differently. The number of energy producers could be less or greater than two. The number of energy consumers could be greater than one.

The energy producers 11, 12 and the energy consumer 21 constitute power plant assets of the hybrid power plant 1, which are preferably co-located at the same production site. The power plant assets are connected to a public electrical grid 30 at a common point of connection 31. When co-located, the renewable energy producers 11, 12 and the energy consumer 21 share a sub-section of the electrical grid 30 to form the hybrid power plant 1 where the renewable energy producer 11, 12 and the energy consumer 21 share the same point of connection 31 to the electrical grid 30. The point of connection is the interface between the hybrid power plant 1 and the electrical grid 30. Typically, the common point of connection 31 will be within a radius of a few km distance (typically 1-10 km or 1-5 km) from the energy consumer 21 and at least one of the renewable energy producer 11, 12.

The electric energy produced by the energy producers 11, 12 is measured by associated power meters 13, 14. The power produced by energy producer 11 and measured by power meter 13 is labeled by $P_{11}$. The power produced by energy producer 12 and measured by power meter 14 is labeled with $P_{12}$. The produced energy may be either provided to the electrical grid 30 or to the energy consumer 21.

The energy consumed by the energy consumer 21 is measured by an associated power meter 22. The power consumed by energy consumer 21 and measured by power meter 22 is denoted with $P_{21}$.

The power which is flowing from the electrical grid into the hybrid power plant 1 at the point of connection 31 or which is fed from the hybrid power plant 1 into the grid 30 is denoted with $P_{30}$. It is measured by a power meter 32 associated and connected to the point of connection 31.

The power meters 13, 14, 22, 32 measure the power level and flow direction (export and import). The power meter 32 is an alternative to the power meters 13, 14, 22 which can be used to do necessary calculations according to the invention. The power measurements are preferably sampled at given time intervals for every 10, 15 minutes or for every hour. Other temporal resolutions can be chosen.

Actual power values measured by the power meters 13, 14, 22 and 30 are communicated to a monitoring unit 41 of a power plant control system 40. The respective power values $P_{11}$, $P_{12}$, $P_{21}$, and $P_{30}$ represent power key figures of the power plant assets 11, 12, 21.

In Fig. 2 and the further embodiments of Figs. 3 to 6, solid lines denote electrical power lines. Signal lines and signal directions are indicated by broken lines having an arrow attached to its end.

The monitoring unit 41 is adapted to receive the measured power key figures $P_{11}$, $P_{12}$, $P_{21}$, and $P_{30}$ of the power plant assets 11, 12, 21 and at the point of connection 31. It is further adapted to provide chemicals' production information CPI, which is calculated from the measured power figures, in particular for a given time interval. The given time interval can be indicated by a (global) time stamp, which is part of the chemicals' production information CPI. The chemicals' production information CPI is used for reporting and statistics purposes and for control operations of the power plant assets of the hybrid power plant 1.

In a hybrid power plant 1 as shown in Fig. 2, as well as in any other configuration, the renewable energy penetration (i.e., the amount of electrical energy produced from renewable energy sources 11, 12) used for chemical production of the energy consumer 21 may be not sufficiently high, resulting in $CO_2$ emissions from electricity generation that may eclipse that of fossil fuel, which the chemical was intended to replace.

The power plant control system 40 according to the present invention can determine the renewable penetration in the local energy mix in real time. For that reason, the power plant control system 40, in particular the monitoring unit 41, processes the measured power figures $P_{11}$, $P_{12}$, $P_{21}$, and $P_{30}$ to determine, for a given time interval which corresponds to the time interval the power key figures have been measured, a fraction of renewable energy used for conversion of the electric energy into the chemical. This fraction is called green fraction GF.

The green fraction GF can be used to report the fraction of energy from a specific grid connected renewable source (i.e., the energy producers 11, 12) used for production of the PtX chemical produced by the energy consumer 21. This information will be used to generate a report or certificate (guarantee of origin) and to control operation of the power plant assets 11, 12, 21 of the hybrid power plant 1. The green fraction GF is defined as follows:

$$(1) \qquad GF = 1,0$$

for $P_{10} \geq P_{21}$, and

$$(2) \qquad GF = P_{10} / P_{21}$$

for $P_{10} < P_{21}$,
where it holds: $P_{10}$ is the total amount of electric energy produced by the energy producers 11, 12 (i.e., $P_{10} = P_{11} + P_{12}$), and $P_{21}$ is the amount of energy consumed by the energy consumer 21 for conversion of the electric energy into the PtX chemical.

The first equation (1) is satisfied if the power produced by the energy producers 11, 12 is higher than the power consumed by the energy consumer 21. Any access power produced by the energy producers 11, 12 is exported to the electrical grid 30. Equation (2) is satisfied, if there is, for example, low wind or low solar radiation, which requires to draw electric energy from the electrical grid 30 to operate the energy consumer 21.

The electrical grid 30 may at any time have a non-zero renewable penetration. The green fraction GF is therefore a minimum value for how much renewable power was consumed by the energy consumer 21. The monitoring unit 41 has direct information on the renewable energy penetration for an identifiable energy producer 11, 12 for the produced chemical. This information can be relayed to an offtaker and final consumer.

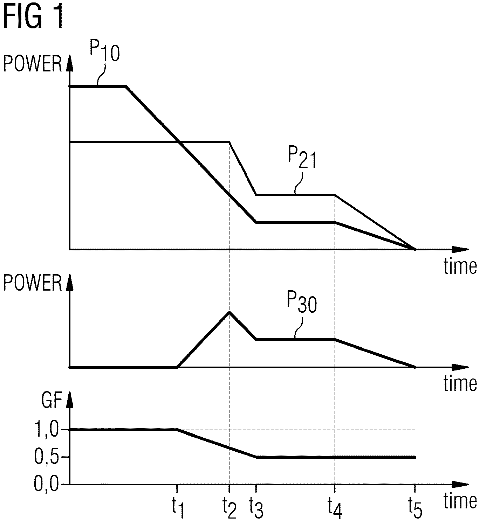

The concept of green fraction GF is illustrated in Fig. 1. Fig. 1 illustrates the correlation between the power consumption $P_{21}$ of a hybrid power plant and the power production $P_{10}$ from connected renewable energy sources. The monitoring unit 41 must eventually draw power from the electrical grid 30, $P_{30}$, to optimize production as the power output of the renewable energy source can decrease below the consumed power. In this example, the production requirement shall be a green fraction of at least 0.5 in real time. This value is used to control the power consumption of the energy consumer 21.

The upper diagram in Fig. 1 shows the produced power $P_{10}$ compared to the consumed power $P_{21}$ of the energy consumer 21. The diagram in the middle shows the power $P_{30}$ drawn from the grid 30. The diagram in the lower part of Fig. 1 illustrates the green fraction GF. Between $t = t_0$ and $t = t_1$, the produced power $P_{10}$ is greater than the consumed power $P_{21}$, resulting in a green fraction GF = 1.0. Between $t = t_1$ and $t = t_2$, the produced power $P_{10}$ is below the consumed power $P_{21}$ where at $t = t_2$ $P_{10} = 0.5 \cdot P_{21}$. The difference between $P_{21}$ and $P_{10}$ is drawn from the electrical grid resulting in an increase of $P_{30}$. Accordingly, the green fraction GF decreases from 1.0 to $\approx 0.7$. At $t = t_3$, the consumed power $P_{21}$ is decreased under the control of the monitoring unit 41. Hence, the drawn power $P_{30}$ from the electrical grid decreases as well. The green fraction GF continues to decrease to its intended minimum value of 0.5. Between $t = t_3$ and $t = t_4$, the produced power $P_{10}$ and the consumed power $P_{21}$ are constant, with $P_{21}$ being greater than $P_{10}$. The difference between $P_{21}$ and $P_{10}$ is drawn from the electrical grid. The green fraction remains on its minimum value 0.5. Between $t = t_4$ and $t = t_5$, the consumed power $P_{21}$ decreases following a decrease of the produced power $P_{11}$ (for example due to reduced wind conditions and/or solar radiation). Accordingly, the power $P_{30}$ drawn from the electrical grid 30 decreases as well. At $t = t_5$, $P_{10}$, $P_{21}$, and $P_{30}$ equal 0. This means, operation of the energy consumer 21 is stopped.

There may be multiple offtakers with different requirements for renewable energy penetration. The monitoring unit 41 allows the operator flexibility and production. The green fraction GF can then be used as input for controlling production of the chemical and for directing the chemicals "flow" to the proper offtake section by controlling gas flows, respectively. Temporary storage of high-grade green fraction chemicals for later release may also be possible.

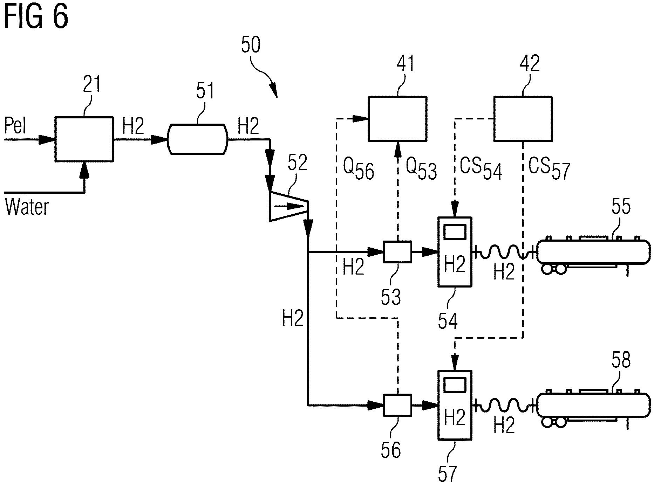

Fig. 6 shows a respective example of a hybrid power plant comprising an offtaking section 50. The offtaking section 50 consists of a buffer volume 51, a compressor 52 and, by example only, two dispensing lines. A first dispensing line consists of a flow meter 53 and a dispenser 54. The second dispensing line consists of flow meter 56 and dispenser 57. The flow meters 53, 56 provide the quantity of chemical delivered to the dispensers 54 and 57, respectively, to the monitoring unit 41. The quantities are denoted with $Q_{53}$ and $Q_{56}$. A hybrid plant controller 42 of the power plant control system 40 controls the dispensers 54 and 57 by means of control signals $CS_{54}$ and $CS_{57}$. The dispensers 54, 57 are connected to respective storage volumes 55 and 58, respectively. The storage volumes 55, 58 may be tube trailers as illustrated or pipelines.

The energy consumer 21 may be an electrolyzer receiving electrical power $P_{el}$ and water to produce hydrogen ($H_2$).

The offtakers of the chemical (hydrogen) may specify different criteria, for example:

- A real time green fraction limit (e.g., GF > 0.8) which could be influenced by a price information. This might be relevant for continuous flow delivery to a pipeline (not shown).
- A daily/weekly/monthly average green fraction limit. This might be used to comply with legislative targets.
- A batch-type average green fraction limit. This might be relevant for fixed volume deliveries, such as tube trailers or gas bottles. If the batch offtaker requires a grade of, for example, GF > 0.75 for the entire gas delivery, then the hybrid plant controller 42 may fill 50% of the vessel with grade GF = 1 and the remaining 50% of the vessel with a grade > GF 0.5.

This can be achieved due to the existence of the buffer volume 51. The hybrid plant controller 42 can determine the gas transport delay within the facility from the exit of the electrolyzer 21 to the offtake interface and feed this information into the hybrid plant controller 42.

The green fraction GF will be used as control parameter of the energy sources 11, 12 and/or the energy consumption of the energy consumer 21. This is done using the already mentioned hybrid plant controller 42 that controls the power consumption by means of a requested power demand $PD_{21}$ of the energy consumer 21 (see Fig. 3, Fig. 4, and Fig. 5). In these embodiments, the available power $PA_{11}$, $PA_{12}$ of the energy producers 11, 12 are also provided to the hybrid plant controller 42.

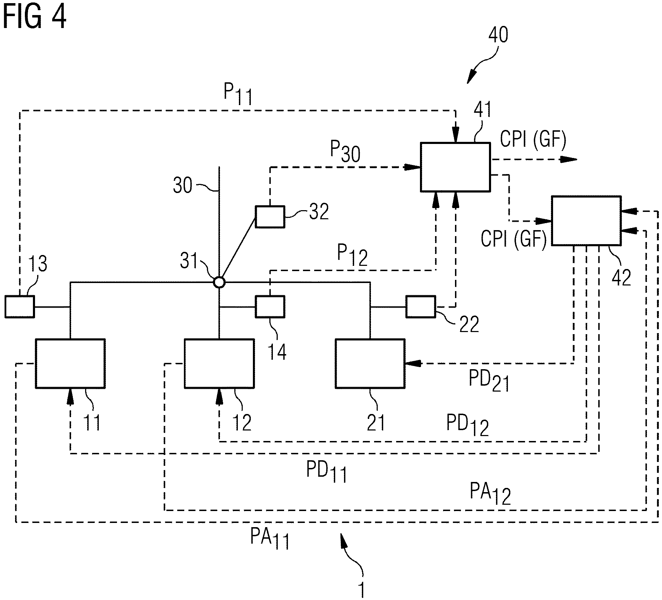

In the embodiment of Fig. 4, power demand signals $PD_{11}$, $PD_{12}$ are communicated to the energy producers 11, 12 in addition to the power demand Signal $PD_{21}$ of the energy consumer 21. For example, control can be needed in the case for curtailment of a wind turbine powering the energy consumer in times where export to the electrical grid 30 is not permissible or limited. Such a power demand to the energy producers 11, 12 could also be the case of too high penetration of renewables in the electrical grid 30, a grid event or similar where a system or grid operator requests the plant owners to reduce electricity exported to the electrical grid 30.

The energy consumer 21 could then operate with a maximum green fraction of e.g., GF = 0.9 while the remaining 10% of power is consumed from the electrical grid. This allows for a safety margin to avoid injecting power into the electrical grid 30 while still maintaining production of the chemical.

The hybrid plant controller 42 according to the embodiments in Figures 3 to 5 makes it possible to operate the hybrid power plant 1 in an "island mode" where no power is exchanged between the electrical grid 30 and the hybrid power plant 1. The power produced from the energy producers 11, 12 equals the power used by the energy consumer 21. Available powers $PA_{11}$, $PA_{12}$ are signals generated by, e.g., wind turbine controllers that indicate how much power the wind turbines can produce in the current wind conditions. The power demand signal $PD_{21}$ is a reference signal that indicates how much the energy consumer should produce/consume of electricity.

In the embodiments shown in Figs. 2 to 5, the energy producers 11, 12 and the energy consumer 21 are co-located, i.e., located at the same site. In an alternative embodiment, energy producers and energy consumer may be separated by great distances across the electrical grid 30 (not shown in the embodiments).

The power plant control system 40 could potentially also incorporate grid information if the monitoring unit 41 has information available on the renewable energy penetration at the time of production. However, such information may not be accurate, available in real-time or at sufficiently high temporal resolution.

The power plant control system might be integrated into a common plant controller or in separate systems located locally at the hybrid power plant or remotely on a server located elsewhere. The power plant control system 40 might be implemented as part of a SCADA system.

The power plant control system 40 and its monitoring unit 41 are preferably connected to a data storage where measurements and/or green fraction GF with corresponding timestamps ts are collected and stored to be provided as chemicals' production information CPI. The data can be exported to external servers/databases for reporting and documentation purposes to serve as a basis for a certification of origin for a PtX product.

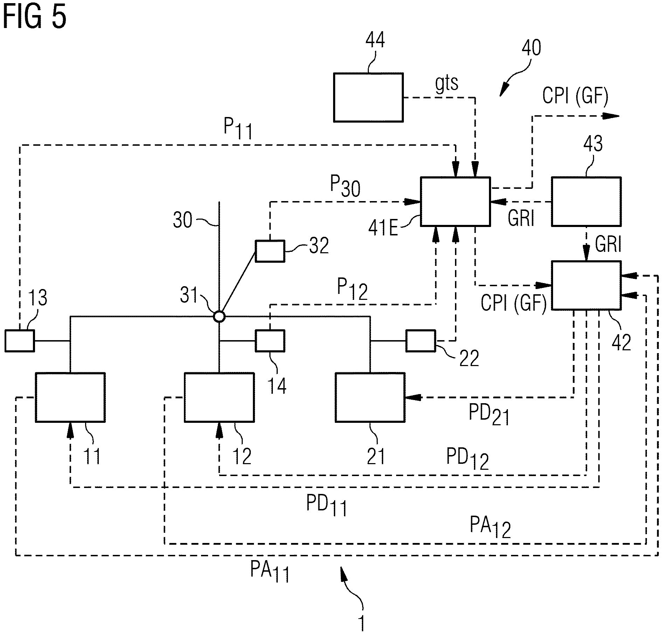

In the embodiment according to Fig. 5, the monitoring unit is an external monitoring unit 41E under the control of an independent third party. In addition, it may be connected to an external grid information provision unit 43 providing actual renewable energy penetration and other information. A global time server 44 may provide a global timestamp gts to the external monitoring unit to enable enhanced control operations.

The energy producers can be used for both onshore and offshore systems.

Renewable energy certificates link power generation and consumption. However, issues such as grid congestion are ignored as the generated power may be consumed locally and cannot be fully transported to the certificate holder. Additionally, there is little or no real-time correlation or control between power production and consumption. Determining the renewable penetration of produced PtX chemical is relevant for pricing. Consumers may wish to pay more for green chemicals from a known renewable source rather than from the electrical grid or from grey chemicals (from natural gas), and the ability to quantify renewable penetration gives the operator of the hybrid power plant according to the invention a competitive advantage. The present invention makes it possible to control the renewable hybrid power plant for generation of both electricity and PtX chemicals, where the green fraction GF of the PtX chemical produced can be guaranteed and documented. This way, 100% green PtX chemicals can be generated using only power from one or more identified renewable energy source(s).

**Claims**

1. A method for computer-implemented controlling a hybrid power plant (1) being connected to an electrical grid (30), the hybrid power plant (1) comprising:

   - at least one energy producer (11, 12) being adapted to generate electric energy from renewable energy sources;
   - at least one energy consumer (21) being adapted to convert electric energy into chemicals;
   - a power plant control system (40) comprising a monitoring unit (41) being adapted to receive measured power key figures ($P_{11}$, $P_{12}$, $P_{21}$) of the at least one energy producer (11, 12) and the at least one energy consumer (21) and to provide chemicals' production information (CPI);

   wherein the following steps are performed by the power plant control system (40) during the operation of the hybrid power plant (1):

   a) obtaining, for a given time interval, measured power key figures ($P_{11}$, $P_{12}$, $P_{21}$) of the at least one energy producer (11, 12) and the at least one energy consumer (21);
   b) processing the measured power figures ($P_{11}$, $P_{12}$, $P_{21}$) to determine, for the given time interval, a fraction of renewable energy used for conversion of the electric energy into the chemicals as a chemicals' production information (CPI), where the fraction is called a green fraction (GF);
   c) processing the green fraction (GF) for a control operation of the hybrid power plant (1).

2. The method according to claim 1, wherein the green fraction and the associated time interval are stored in a database of the power plant control system (40) for later assessment.

3. The method according to claim 1 or 2, wherein the control operation of the hybrid power plant (1) is such that the green fraction at least meets a given threshold.

4. The method according to one of the preceding claims, wherein the green fraction (GF) is defined as

$$(1) \qquad GF = 1,0$$

for $P_{10} \geq P_{21}$, and

$$(2) \qquad GF = P_{10} \ / \ P_{21}$$

for $P_{10} < P_{21}$
where it holds:

   $P_{10}$ is the total amount of electric energy ($P_{11}$, $P_{12}$) produced by the at least one energy producer (11, 12), and
   $P_{21}$ is the amount of energy used by the at least one energy consumer (21) for conversion of the electric energy into the chemicals.

5. The method according to one of the preceding claims, wherein processing the green fraction (GF) comprises determining a first control variable which represents a power demand ($PD_{21}$) of the at least one energy consumer (21).

6. The method according to one of the preceding claims, wherein processing the green fraction (GF) comprises determining a second control variable which represents a power demand ($PD_{11}$, $PD_{12}$) of the at least one energy producer (11, 12).

7. The method according to claims 5 or 6, wherein the first and second control variables are determined depending on an available power ($PA_{11}$, $PA_{12}$) of the at least one energy producer (11, 12).

8. The method according to one of the preceding claims, wherein the hybrid power plant (1) comprises an offtaking section (50) with at least one chemicals' dispenser (54, 57), each of the at least one dispenser (54, 57) having a given green fraction renewable energy penetration associated therewith, where filling of the chemical to a respective storage volume connected to the at least one dispenser (54, 57) is controlled according to the given green fraction.

9. The method according to claim 8, wherein the hybrid power plant (1) comprises a buffer volume (51) connected between the at least one energy consumer (21) and the offtaking section (50), where filling of the chemical to a respective storage volume is made out of the buffer volume (51).

**10.** A computer program product with program code, which is stored on a non-transitory machine-readable carrier, for carrying out a method according to one of claims 1 to 9 when the program code is executed on a computer.

**11.** An apparatus for computer-implemented controlling a hybrid power plant (1) being connected to an electrical grid (60), the power plant (10) comprising:

- at least one energy producer (11, 12) being adapted to generate electric energy from renewable energy sources;
- at least one energy consumer (21) being adapted to convert electric energy into chemicals;
- a power plant control system (40) comprising a monitoring unit (41) being adapted to receive measured power key figures ($P_{11}$, $P_{12}$, $P_{21}$) of the at least one energy producer (11, 12) and the at least one energy consumer (21) and to provide chemicals' production information (CPI);

wherein a processing unit of the apparatus is configured to perform during the operation of the power plant (10) the following steps:

a) obtaining, for a given time interval, measured power key figures ($P_{11}$, $P_{12}$, $P_{21}$) of the at least one energy producer (11, 12) and the at least one energy consumer (21);
b) processing the measured power figures ($P_{11}$, $P_{12}$, $P_{21}$) to determine, for the given time interval, a fraction of renewable energy used for conversion of the electric energy into the chemicals as a chemicals' production information (CPI), where the fraction is called a green fraction (GF);
c) processing the green fraction (GF) for a control operation of the hybrid power plant (1).

**12.** A hybrid power plant (1) comprising:

- at least one energy producer (11, 12) being adapted to generate electric energy from renewable energy sources;
- at least one energy consumer (21) being adapted to convert electric energy into chemicals;
- a power plant control system (40) comprising a monitoring unit (41) being adapted to receive measured power key figures ($P_{11}$, $P_{12}$, $P_{21}$) of the at least one energy producer (11, 12) and the at least one energy consumer (21) and to provide chemicals' production information (CPI);

wherein the hybrid power plat comprises an apparatus according to claim 11.

**13.** The apparatus according to claim 12, wherein the at least one energy producer (11, 12) and the at least one energy consumer (21) are co-located at a production site.

## FIG 1

FIG 2

FIG 3

FIG 4

FIG 5

# FIG 6

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/065162 A1 (HUNT DAVID [US] ET AL) 3 March 2022 (2022-03-03)<br>* abstract *<br>* figures 1A,1B,2-8 *<br>* paragraphs [0063], [0068], [0070], [0080], [0091], [0093], [0129], [0140], [0154], [0187], [0188], [0189], [0193] *<br>* paragraphs [0187] – [0196] *<br>* claims 1,7 * | 1-13 | INV.<br>H02J3/14<br>H02J3/38 |
| X | US 2014/021785 A1 (MUNIER ERIC [FR] ET AL) 23 January 2014 (2014-01-23)<br>* abstract *<br>* figures 1,2,3 *<br>* paragraphs [0029], [0030], [0031], [0035], [0042], [0043], [0044], [0051] *<br>* paragraphs [0063], [0066], [0067], [0070], [0072], [0078], [0080] *<br>* claims 1,10 * | 1-13 | |
| X | US 2022/112107 A1 (HABERMAN DAVID [US]) 14 April 2022 (2022-04-14)<br>* abstract *<br>* figures 1,2,3 *<br>* paragraphs [0028], [0029] *<br>* claims 1,2,5,6,10 * | 1-13 | TECHNICAL FIELDS SEARCHED (IPC)<br><br>H02J |
| X | US 2004/194382 A1 (FAIRLIE MATTHEW J [CA] ET AL) 7 October 2004 (2004-10-07)<br>* abstract *<br>* paragraphs [0035], [0037], [0041], [0081] *<br>* claims 1,41,48,79 * | 1-13 | |

-/--

The present search report has been drawn up for all claims

| Place of search | Date of completion of the search | Examiner |
|---|---|---|
| Munich | 16 November 2022 | Fiat, Cyrille |

EPO FORM 1503 03.82 (P04C01)

page 1 of 2

Europäisches
Patentamt

European
Patent Office

Office européen
des brevets

# EUROPEAN SEARCH REPORT

Application Number

EP 22 17 6661

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2022/052530 A1 (SEIDEL MATTHIAS [DE] ET AL) 17 February 2022 (2022-02-17) * abstract * * paragraphs [0035], [0037], [0047] * * claims 1,3,11 * ----- | 1,10-13 | |

TECHNICAL FIELDS
SEARCHED      (IPC)

The present search report has been drawn up for all claims

| Place of search | Date of completion of the search | Examiner |
|---|---|---|
| Munich | 16 November 2022 | Fiat, Cyrille |

EPO FORM 1503 03.82 (P04C01)

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................

& : member of the same patent family, corresponding
document

page 2 of 2

## ANNEX TO THE EUROPEAN SEARCH REPORT
## ON EUROPEAN PATENT APPLICATION NO.

EP 22 17 6661

This annex lists the patent family members relating to the patent documents cited in the above-mentioned European search report.
The members are as contained in the European Patent Office EDP file on
The European Patent Office is in no way liable for these particulars which are merely given for the purpose of information.

16-11-2022

| Patent document cited in search report | Publication date | Patent family member(s) | | Publication date |
|---|---|---|---|---|
| US 2022065162 A1 | 03-03-2022 | DE | 102021122661 A1 | 03-03-2022 |
| | | JP | 2022042010 A | 11-03-2022 |
| | | US | 2022065162 A1 | 03-03-2022 |
| US 2014021785 A1 | 23-01-2014 | AU | 2012228478 A1 | 03-10-2013 |
| | | BR | 112013023255 A2 | 27-12-2016 |
| | | CA | 2830303 A1 | 20-09-2012 |
| | | DK | 2686934 T3 | 16-01-2017 |
| | | EP | 2686934 A1 | 22-01-2014 |
| | | ES | 2609764 T3 | 24-04-2017 |
| | | FR | 2972867 A1 | 21-09-2012 |
| | | JP | 6209085 B2 | 04-10-2017 |
| | | JP | 2014514898 A | 19-06-2014 |
| | | PT | 2686934 T | 27-12-2016 |
| | | RU | 2013141828 A | 27-04-2015 |
| | | US | 2014021785 A1 | 23-01-2014 |
| | | WO | 2012123350 A1 | 20-09-2012 |
| US 2022112107 A1 | 14-04-2022 | NONE | | |
| US 2004194382 A1 | 07-10-2004 | AT | 332284 T | 15-07-2006 |
| | | AU | 778327 B2 | 02-12-2004 |
| | | BR | 0010509 A | 13-02-2002 |
| | | CA | 2271448 A1 | 12-11-2000 |
| | | CA | 2370031 A1 | 23-11-2000 |
| | | CA | 2862221 A1 | 23-11-2000 |
| | | CN | 1350506 A | 22-05-2002 |
| | | CN | 1733597 A | 15-02-2006 |
| | | DE | 60029214 T2 | 09-08-2007 |
| | | EP | 1177154 A1 | 06-02-2002 |
| | | EP | 1623955 A2 | 08-02-2006 |
| | | ES | 2267521 T3 | 16-03-2007 |
| | | HK | 1046894 A1 | 30-01-2003 |
| | | IS | 6146 A | 06-11-2001 |
| | | JP | 2002544389 A | 24-12-2002 |
| | | JP | 2006037226 A | 09-02-2006 |
| | | KR | 20020024585 A | 30-03-2002 |
| | | KR | 20050084477 A | 26-08-2005 |
| | | MX | PA01011403 A | 24-04-2002 |
| | | US | 6745105 B1 | 01-06-2004 |
| | | US | 2004131508 A1 | 08-07-2004 |
| | | US | 2004194382 A1 | 07-10-2004 |
| | | US | 2004199294 A1 | 07-10-2004 |
| | | US | 2004199295 A1 | 07-10-2004 |
| | | US | 2005145505 A1 | 07-07-2005 |
| | | US | 2007179672 A1 | 02-08-2007 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 22 17 6661

This annex lists the patent family members relating to the patent documents cited in the above-mentioned European search report.
The members are as contained in the European Patent Office EDP file on
The European Patent Office is in no way liable for these particulars which are merely given for the purpose of information.

16-11-2022

| Patent document cited in search report | Publication date | Patent family member(s) | | Publication date |
|---|---|---|---|---|
| | | WO | 0069773 A1 | 23-11-2000 |
| | | ZA | 200108897 B | 28-08-2002 |
| US 2022052530 A1 | 17-02-2022 | CN | 113383477 A | 10-09-2021 |
| | | DE | 102018009341 A1 | 28-05-2020 |
| | | EP | 3888219 A1 | 06-10-2021 |
| | | US | 2022052530 A1 | 17-02-2022 |
| | | WO | 2020109300 A1 | 04-06-2020 |

EPO FORM P0459

For more details about this annex : see Official Journal of the European Patent Office, No. 12/82

page 2 of 2